# FASCICULE DE BREVET EUROPEEN

(11) **EP 0 944 302 B1**
(45) Date de publication et mention de la délivrance du brevet: **17.12.2003**
(21) Numéro de dépôt: 97938973.1
(22) Date de dépôt: 03.09.1997
(51) Int. Cl.: A01K 15/02

(54) **DISPOSITIF D'INTERDICTION DE FRANCHISSEMENT D'UNE LIMITE DE ZONE PAR UN ANIMAL**
VORRICHTUNG ZUM VERHINDERN DES ÜBERSCHREITEN EINER GRENZLINIE DURCH EIN TIER
DEVICE FOR PROHIBITING THE CROSSING OF A ZONE BOUNDARY BY AN ANIMAL

(30) Priorité: 03.09.1996 FR 9610870
(43) Date de publication de la demande: 29.09.1999
(73) Titulaire: DYNAVET Société par actions simplifiée, 63000 Clermont-Ferrand (FR)
(72) Inventeur: ANDRE, Max, F-63400 Chamalières (FR); AUBRY, Xavier, F-63400 Chamalières (FR)
(74) Mandataire: Chanet, Jacques
(86) Numéro de dépôt international: FR9701550
(87) Numéro de publication internationale: WO98009508

(56) Documents cités:
- WO-A-95/05071
- WO-A-96/04628
- GB-A- 2 220 814
- US-A- 3 980 051
- US-A- 5 046 453

## Description

L'invention est du domaine des moyens de maîtrise du comportement des animaux, et plus particulièrement des animaux domestiques, et elle a pour objet un dispositif d'interdiction de franchissement d'une limite de zone entre un animal et un poste de surveillance.

On connaît divers dispositifs pour interdire à un animal d'approcher, ou de s'éloigner, d'une zone. Ces dispositifs comprennent dans leur généralité des moyens de détection de la position de l'animal par rapport à au moins un poste de surveillance, et des moyens de sanction qui sont mis en oeuvre lorsque l'animal est en situation de faute, c'est à dire lorsqu'il se trouve à une distance trop proche, ou trop éloignée, du poste de surveillance.

D'une manière générale, le problème à résoudre pour ces dispositifs réside dans le compromis à trouver entre efficacité, fiabilité en prenant en compte une possible accoutumance de l'animal à la sanction, ergonomie permettant à l'utilisateur d'exploiter le dispositif avec facilité, et coûts de revient et d'exploitation les plus faibles possibles pour rendre le dispositif compétitif. Ainsi, d'une manière générale, les efforts des concepteurs dans le domaine et les démarches inventives respectives qui en ont découlé portent sur des dispositifs mettant en oeuvre des modalités de fonctionnement et des moyens y afférents qui leurs semblent répondre au mieux à ce compromis.

Certains concepteurs de l'Art Antérieur ont proposé des dispositifs simples : par exemple, le brevet US 3980051 (FURY) décrit un dispositif prévu pour être porté par l'utilisateur et destiné à maintenir l'animal près de lui. Les moyens de détection de la position de l'animal sont du type à émission-réception de signaux ultrasonores, un émetteur étant supporté par le collier de l'animal et un récepteur étant supporté par un poste de surveillance porté par l'utilisateur. Lorsque l'animal s'éloigne trop de l'utilisateur et que le signal ultrasonore n'est plus perçu par le poste de surveillance, un signal sonore audible par l'animal est émis depuis le poste de surveillance pour le rappeler. Par exemple encore, le brevet US 5501179 (CORY) propose un dispositif comportant des moyens de détection de l'approche de l'animal, par détection de chaleur par exemple, pour actionner une pompe projetant de l'eau. Concernant ce dernier mode de sanction par projection de fluide, on notera la divulgation par le brevet FR2560003 (VINCI) d'un mode de sanction par projection de fluide, mettant en oeuvre une électrovanne commandée par des moyens de détection des aboiements d'un chien.

Les modalités de mise en oeuvre des moyens de sanction sont déterminantes pour l'efficacité et la fiabilité du dispositif, et certains concepteurs de l'Art Antérieur ont porté leur choix sur des moyens de sanction du type choc électrique, avec un avertissement préalable pour l'animal, sonore notamment ou choc électrique de faible intensité. Plusieurs limites de zone correspondent respectivement à la mise en oeuvre de l'avertissement et à l'application de la sanction. On pourra par exemple se reporter aux brevets GB 2220814 (TORRINGTON PRODUCTS VENTURE), WO9402004 (POLE ZERO CORP.), WO9630882 (RADIO SYSTEM CORPORATION), WO9528691 (RADIO SYSTEM CORPORATION), WO9604628 (YARNALL) et WO9505071 (INVISIBLE FENCE COMPAGNY).

Les moyens de détection de la position de l'animal doivent alors prendre en compte cette pluralité de limites de zone. Certains dispositifs, tels que ceux décrits dans WO9630882 (RADIO SYSTEM CORPORATION), WO9528691 (RADIO SYSTEM CORPORATION), ou WO9505071 (INVISIBLE FENCE COMPAGNY), utilisent des moyens générateurs d'un champ magnétique, au moyen d'une boucle inductive notamment, qui circonscrit la zone et constitue de ce fait le poste de surveillance. D'autres dispositifs, tels ceux décrits par GB 2220814 (TORRINGTON PRODUCTS VENTURE), WO 9604628 (YARNALL) ou WO9402004 (POLE ZERO CORP.) utilisent des signaux par radiofréquences. D'une manière générale, un premier signal est émis vers un organe capteur indifféremment embarqué sur l'animal ou supporté par le poste de surveillance. Ce premier signal est comparé à un premier signal de référence pour détecter un franchissement par l'animal d'une première limite de zone. Dans l'affirmative, un signal-retour est émis pour la mise en oeuvre de l'avertissement; la sanction est ensuite appliquée dans le cas où, malgré l'avertissement donné, l'animal reste à l'intérieur de la première zone pendant une durée prédéterminée, ou dans le cas où l'animal franchit une deuxième limite de zone, dans lequel cas l'application de la sanction est commandée par un second signal-retour après comparaison du premier signal avec un deuxième signal de référence.

Il apparaît que le choix des moyens de sanction d'abord, et ensuite le choix des modalités de leur mise en oeuvre par des moyens appropriés adaptés à la nature des moyens de sanction choisis, sont déterminants quant à l'efficacité du dispositif. Le problème posé par les dispositifs de l'Art Antérieur réside dans le fait que les différentes démarches inventives des concepteurs les ont conduits à porter leur choix sur des moyens de sanction et leurs modalités de mise en oeuvre qui rendent possible une accoutumance de l'animal à la sanction, et donc une perte d'efficacité des dispositifs dans le temps.

Ainsi, le but de la présente invention est de proposer un dispositif d'interdiction de franchissement d'une limite de zone entre au moins un animal et au moins un poste de surveillance, qui soit compétitif, efficace et fiable dans le temps à l'encontre d'une éventuelle accoutumance de l'animal.

La démarche inventive de la présente invention a pour premier fondement de proposer un dispositif d'interdiction de franchissement de limite de zone pour un animal, dont les moyens de sanction sont tels que les modalités de fonctionnement du dispositif puissent prendre en compte l'évolution de la situation de faute de l'animal, notamment par une mesure de la distance séparant l'animal du poste de surveillance et par une mesure du temps de présence de l'animal dans la zone, pour appliquer une sanction et la faire varier proportionnellement à l'évolution de la situation de faute, et donc proportionnellement à l'attitude de l'animal. Le choix des moyens de sanction doit donc prendre en compte la possibilité de maintenir la sanction et de la faire évoluer en permanence tant que l'animal persiste dans son dépassement de l'interdiction.

Un deuxième fondement de la démarche inventive de la présente invention est de permettre à l'utilisateur de modifier les modalités de fonctionnement du dispositif, en fonction des réactions habituellement prises par l'animal et en fonction de son accoutumance au fonctionnement du dispositif. Le choix des moyens de sanction doit donc prendre en compte leur faculté d'adaptabilité à une modification de leur modalités de mise en oeuvre, sans perturber ou nuire outre mesure à l'animal.

Ainsi, un premier aspect de l'invention réside dans le fait que les moyens de sanction sont du type à projection de fluide, habituellement négligés par les concepteurs de l'Art Antérieur, les dits moyens de sanction mettant en oeuvre une électrovanne, grâce à quoi et à des moyens simples d'activation de l'électrovanne qui rendent le dispositif compétitif, la sanction peut être maintenue tant que l'animal est en situation de faute, peut être adaptée par l'utilisateur suivant les attitudes et réactions habituelles de l'animal au dispositif, et peut évoluer proportionnellement à l'attitude de l'animal après application de la sanction.

Ainsi et selon un autre aspect de l'invention, le dispositif comprend des moyens de commande de l'activation de l'électrovanne placée sous la dépendance de l'un quelconque au moins, en premier lieu de moyens de détection de la position de l'animal par rapport au poste de surveillance, comprenant des moyens de mesure de la distance les séparant, et en deuxième lieu de moyens chronométriques mesurant le temps de présence ou non de l'animal dans la zone, de telle sorte que la sanction soit variable proportionnellement à la variation de la dite distance et/ou proportionnellement au temps de présence de l'animal dans la zone, ou hors de cette dernière suivant le motif de l'interdiction.

Poursuivant sa démarche inventive, la Demanderesse propose de permettre à l'utilisateur, grâce à des moyens de sélection et de réglage de seuils de mise en oeuvre, de faire varier les modalités d'application de la sanction, tant celles d'activation de l'électrovanne par une variation de la durée de chacune des projections de fluide, et/ou par une variation de la fréquence de ces projections, et/ou par une variation du débit de l'électrovanne pour une durée donnée d'activation, que celles relevant des critères d'évaluation de la faute de l'animal, suivant le temps de présence ou non de celui-ci dans la zone et/ou suivant la variation de la distance le séparant du poste de surveillance.

On comprendra que selon les démarches inventives susvisées, les moyens de détection de la position de l'animal et les moyens chronométriques sont des moyens de mesure qui fournissent des informations qui reflètent en permanence l'attitude de l'animal et qui sont exploitables pour faire varier proportionnellement à ces mesures l'activation de l'électrovanne.

Aussi, les moyens de détection de la position de l'animal sont par exemple des moyens du type ultrasonores, du type radiofréquences ou encore du type à boucle inductive, comprenant un organe émetteur et un organe récepteur indifféremment embarqués sur l'animal ou supportés par le poste de surveillance. Toutefois, les moyens du type ultrasonores sont préférés en exploitant l'amplitude du signal ultrasonore reçu qui est mesuré pour déterminer l'écart entre l'animal et le poste de surveillance.

Ainsi le dispositif d'interdiction de franchissement de limite de zone par un animal de l'invention est du genre de dispositif comprenant:
- une source d'énergie électrique basse tension,
- des moyens de détection de la position de l'animal par rapport à la limite de zone, comprenant des moyens interactifs respectivement embarqués par l'animal et supportés par un poste de surveillance,
- des moyens, dits de sanction, générateurs d'un stimulus chez l'animal, et
- des moyens de commande de la mise en oeuvre des moyens de sanction, placés sous la dépendance de moyens de traitement et d'analyse des informations fournies par les dits moyens de détection.

Selon l'invention, ce dispositif comprend les dispositions suivantes, prises seules ou en combinaison.

Selon un premier aspect de l'invention, les moyens de sanction sont des moyens de brumisation d'un fluide, supportés par le poste de surveillance et comprenant une électrovanne et un réservoir du fluide sous pression, les dits moyens de commande étant des moyens d'activation à l'ouverture de l'électrovanne pour libérer le fluide contenu dans le réservoir.

Selon un deuxième aspect de l'invention, la mise en oeuvre des moyens de commande des moyens de sanction est placée sous la dépendance de moyens pour faire varier l'activation de l'électrovanne suivant l'un quelconque au moins des paramètres comprenant la durée entre deux activations successives, ou, inversement, la fréquence d'activation de l'électrovanne, la durée de chacune des activations de l'électrovanne, et le débit de l'électrovanne à chacune de ses activations à durée constante. Toutefois, une variation de durée d'activation et une variation de débit de l'électrovanne entraînant une consommation inopportune du fluide, il est préféré de faire varier l'activation de l'électrovanne seulement selon la fréquence d'activation, et de pourvoir le dispositif de moyens de réglage par l'utilisateur de la durée d'activation de l'électrovanne.

Selon un troisième aspect de l'invention, les moyens pour faire varier la sanction, donc l'activation de l'électrovanne, comprennent des moyens de mesure de la distance séparant l'animal du poste de surveillance, et des moyens chronométriques pour mesurer le temps de présence ou non de l'animal dans la zone. Le dispositif comprend en outre des moyens de sélection par l'utilisateur de la mise en oeuvre, pour faire varier l'activation de l'électrovanne, de l'un ou l'autre des dits moyens de détermination de la variation de la distance ou des dits moyens chronométriques.

De préférence, les dits moyens de sélection sont associés à des moyens de réglage du quantum de chacun des paramètres de variation de la sanction, telle que l'activation de l'électrovanne suivant le dit premier aspect de l'invention.

Selon un quatrième aspect de l'invention, les moyens interactifs de détection de la position de l'animal par rapport au poste de surveillance, comprennent des moyens émetteurs et récepteurs de signaux ultrasonores respectivement supportés soit par l'animal, par l'intermédiaire d'un collier par exemple, soit par le poste de surveillance, et des moyens de traitement et d'analyse du signal ultrasonore reçu comprenant des moyens de comparaison entre le signal ultrasonore reçu et un signal de consigne, pour déterminer la présence ou non de l'animal dans la zone, et des moyens de mesure de l'amplitude du signal ultrasonore reçu pour déterminer la distance séparant les moyens émetteurs des moyens récepteurs.

Selon un cinquième aspect de l'invention, les dits moyens d'analyse du signal ultrasonore reçu et les dits moyens pour faire varier l'activation de l'électrovanne mettent en oeuvre un microprocesseur, dont les modalités de fonctionnement sont préalablement sélectionnées par l'utilisateur parmi une pluralité de modalités de fonctionnement mémorisées, au moyen par exemple d'une batterie de commutateurs constituant les dits moyens de sélection et de réglage par combinaison de sélection entre les différents commutateurs.

Selon un sixième aspect de l'invention, les moyens de traitement du signal ultrasonore reçu comprennent des moyens d'amplification et de filtration du signal reçu, et de détection de l'enveloppe du signal pour identifier le signal reçu et le reconnaître comme étant le signal valide émis par les moyens émetteurs du dispositif, et pour émettre un signal, dit d'information, vers les moyens de comparaison et les moyens de mesure de l'amplitude du signal reçu.

De préférence, le dispositif comprend en outre, interposés entre la source d'énergie électrique et le microprocesseur, des moyens, dits de mise en veille du dispositif, pour placer le microprocesseur en mode basse consommation en l'absence de détection d'une situation de faute de l'animal relative à sa présence ou non dans la zone.

Un procédé de fonctionnement d'un dispositif qui vient d'être décrit, est caractéristique en ce qu'il consiste:
- à reconnaître la validité du signal ultrasonore reçu de la part de moyens émetteurs portés par l'animal et à le traiter pour former un signal, dit d'information, dont l'amplitude varie selon l'intensité du signal ultrasonore reçu,
- à comparer le signal d'information avec un signal de référence, pour détecter la présence ou l'absence de l'animal dans la zone, et parallèlement à introduire le signal d'information dans le microprocesseur,
- à, dans le cas où le présence ou l'absence de l'animal dans la zone est détectée, introduire dans le microprocesseur un second signal, dit de mise en oeuvre, pour activer le microprocesseur normalement en position de veille, ce dernier mesurant alors la distance séparant l'animal du poste de surveillance à partir de l'amplitude du signal d'information, puis
- à faire varier par le microprocesseur la mise en oeuvre de moyens de commande de moyens de sanction supportés par un poste fixe de surveillance de la zone, en fonction de la sélection préalablement opérée par l'utilisateur au moyen de la batterie de commutateurs, soit à partir du signal de mise en oeuvre introduit dans le microprocesseur, par l'intermédiaire des moyens chronométriques, soit à partir de la variation d'amplitude du signal d'information.

On comprendra que selon une autre approche de l'invention, un procédé de l'invention pour intérdire le franchissement d'une zone par un animal, est du genre de procédé comprenant les étapes consistant successivement:
- à détecter la présence ou non de l'animal dans une zone dont la limite est préréglée par l'utilisateur, grâce à des moyens interactifs respectivement embarqués sur l'animal et supportés par le poste de surveillance, pour définir une situation de faute ou non de l'animal à partir des informations échangées entre les dits moyens interactifs, et
- à opérer en cas d'une situation de faute définie, un stimulus pour l'animal par des moyens dits de sanction.

Ce procédé est caractérisé en ce que le stimulus est opéré dès que la situation de faute est définie, par projection d'un fluide au moyen d'une électrovanne, supportée par le poste de surveillance et dont l'activation est placée sous la dépendance des moyens de détection de la faute, et en ce que ce stimulus est repété avec une accélération de la fréquence de projection du fluide, laquelle fréquence varie en fonction de l'évolution de la situation de faute suivant l'un quelconque au moins des facteurs d'évolution comprenant une variation de la distance séparant l'animal du poste de surveillance, et une persistance de la faute.

De préférence, ce procédé comprend l'étape préalable consistant à sélectionner le mode de fonctionnement du dispositif souhaité par l'utilisateur parmi une pluralité de modalités de fonctionnements mémorisées.

La présente invention sera mieux comprise, et des détails en relevant apparaîtront, à la description qui va en être faite de formes préférées de réalisation, en relation avec les figures des planches annexées, dans lesquelles:
les fig.1 et 2 sont des illustrations d'exemples respectifs d'application d'un dispositif de l'invention selon différentes formes de réalisation, chacune des illustrations comprenant deux schémas a et b représentant un exemple de situation à deux étapes différentes,
la fig.3 est une représentation schématique d'une forme de réalisation d'un dispositif de l'invention, respectivement pour les applications des figures précédentes,
les fig.4 à 10 sont des illustrations de différents modes de fonctionnement d'un dispositif de l'invention, chacune des illustrations comprenant deux diagrammes, l'un, supérieur, illustrant les mouvements de l'animal par rapport à un poste de surveillance, l'autre, inférieur, illustrant les modes d'activation d'une électrovanne pour la projection d'un f luide.
les fig.11 et 12 sont des schémas électroniques compréhensibles par l'homme de l'art, qui illustrent un exemple élémentaire de réalisation des moyens d'analyse et de commande d'un dispositif de l'invention, dans le cas où ceux-ci sont supportés par le poste de surveillance,
la fig.13 est un schéma électronique compréhensible par l'homme de l'art, qui illustre un exemple élémentaire de réalisation des moyens d'analyse et de commande d'un dispositif de l'invention, dans le cas où ceux-ci sont embarqués sur l'animal,
la fig.14 est un schéma détaillant l'organisation des moyens des dispositifs illustrés sur les fig. 11 à 13.

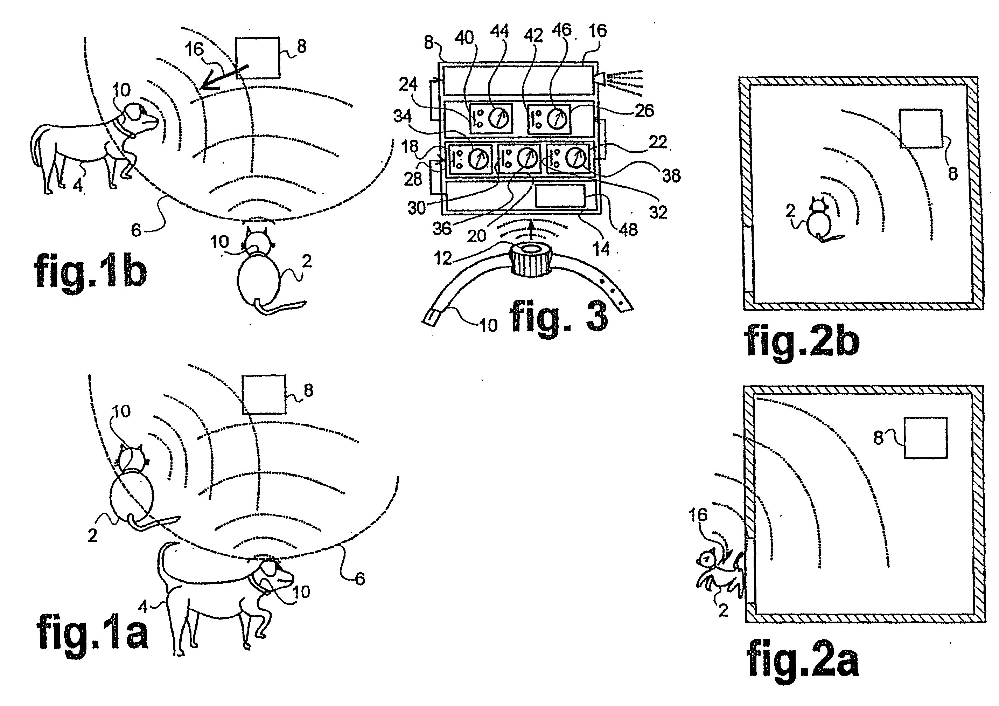

Sur les figures, un dispositif d'interdiction de franchissement d'une limite de zone entre un animal 2,4 et un poste de surveillance, vise à éloigner un animal 2, 4 d'une zone à protéger, telle que 6 sur l'exemple de la fig.1. Sur ce même exemple, le dispositif associe un collier 10 porté par l'animal 2,4 et équipé de moyens 12 émetteurs d'un signal ultrasonore, et un poste de surveillance 8, équipé de moyens 14 récepteurs du dit signal ultrasonore et de moyens de projection d'un fluide, comprenant une électrovanne 16 dont l'activation est placée sous la dépendance de moyens de commande eux-mêmes placés sous la dépendance de moyens de traitement et d'analyse du signal ultrasonore reçu.

Les dits moyens de traitement et d'analyse du signal ultrasonore reçu comprennent des moyens 18 de détection de la présence ou non de l'animal dans la zone, des moyens 20 de mesure de la distance séparant l'animal 2,4 du poste de surveillance 8, et des moyens chronométriques 22 pour mesurer le temps de présence de l'animal 2,4 dans la zone.

Le dispositif comporte en outre des moyens 24, de variation de la durée d'activation de l'électrovanne 16, et des moyens 26 de variation de la fréquence d'activation de l'électrovanne 16.

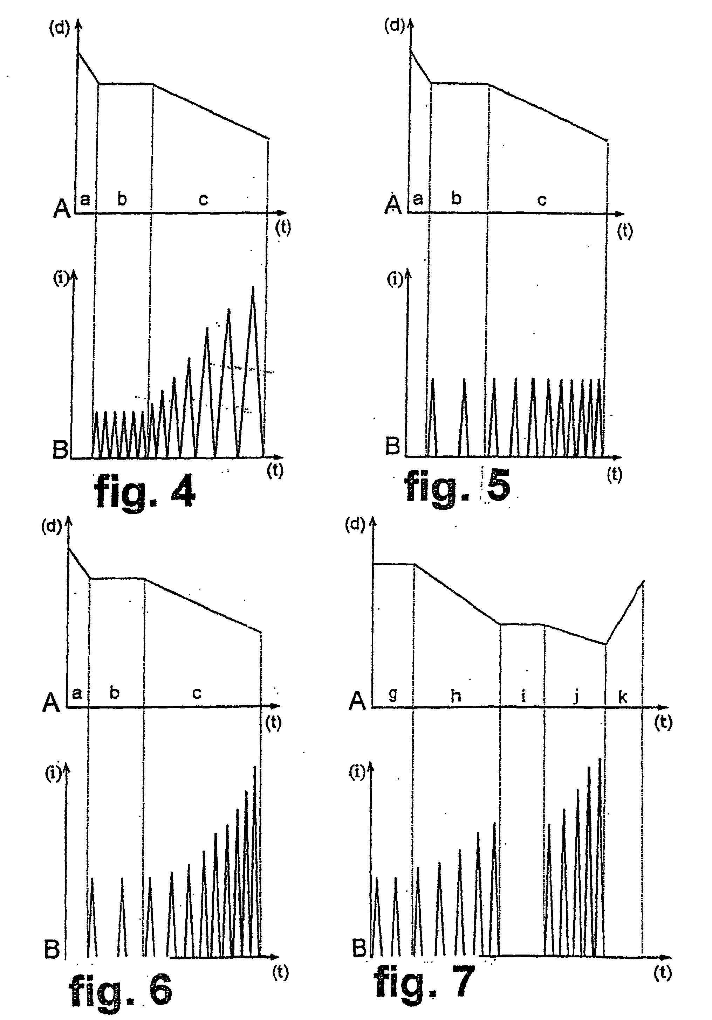

En se reportant aux fig.4 à 10, le dispositif de l'invention est tel que l'activation de l'électrovanne 16 varie en durée et/ou en fréquence au cours d'une situation dans laquelle sont pris en compte les facteurs de variation de la position de l'animal par rapport au poste de surveillance, soit parce que celui-ci s'approche ou s'éloigne de ce dernier, soit parce que celui-ci est stationnaire dans la zone à interdire.

Par exemple sur les fig.4 à 6, et en se reportant sur le diagramme supérieur A des figures, l'animal s'approche du poste de surveillance jusqu'à ce qu'il parvienne à la limite de zone (plage a) à partir de laquelle l'électrovanne 16 est activée, puis l'animal s'arrête (plage b) et s'approche à nouveau (plage c). En se reportant au diagramme inférieur B des figures, l'électrovanne est activée dès que l'animal franchit la limite de zone et reste activée en fréquence constante tant que l'animal reste stationnaire (plage b); lorsqu'il s'approche davantage du poste de surveillance (plage c), l'activation de l'électrovanne varie, en augmentant soit en durée (fig.4), soit en fréquence (fig.5), soit à la fois en durée et en fréquence (fig.6).

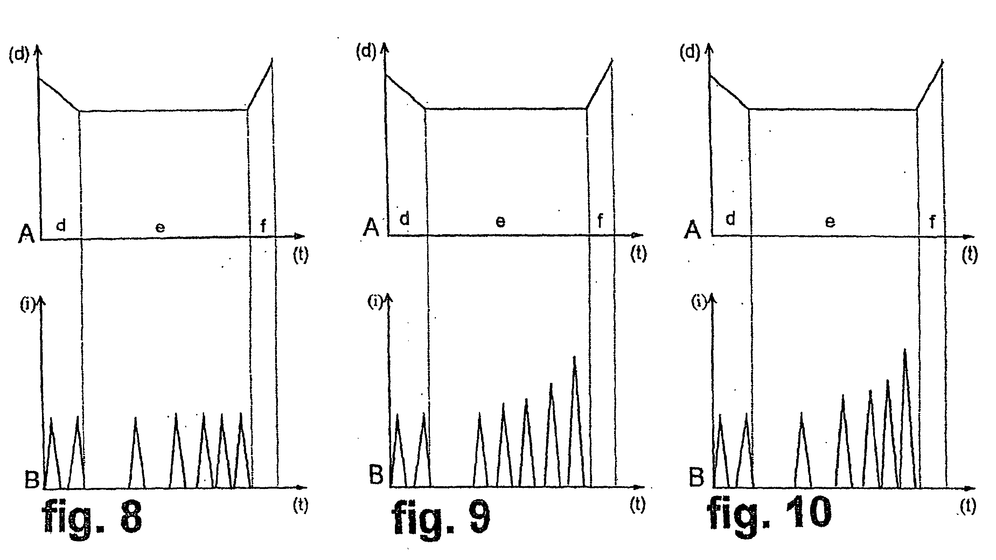

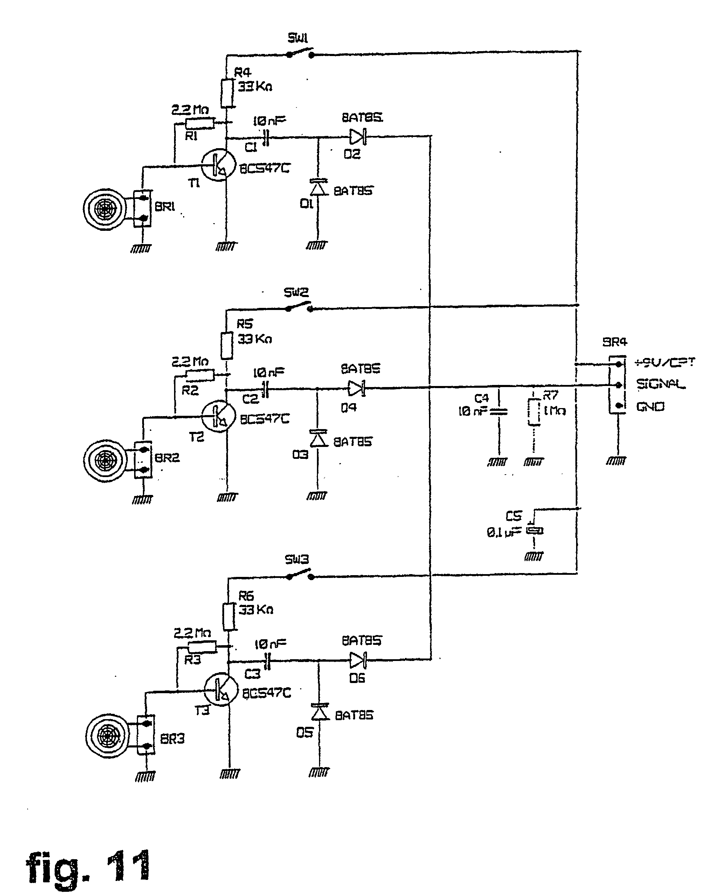

Par exemple encore sur les fig.8 à 10, et en se reportant sur le diagramme supérieur A des figures, l'animal, toujours présent dans la zone (plage d,e,f), s'approche du poste de surveillance dans un premier temps (plage d), puis reste stationnaire (plage e), puis s'éloigne dans un troisième temps (plage f). En se reportant aux diagrammes inférieurs B des figures, l'activation de l'électrovanne varie tant que l'animal, stationnaire en attitude d'observation, est présent dans la zone (plage e), la dite variation étant mise en oeuvre soit en fréquence (fig.8), soit en amplitude (fig.9), soit en amplitude et en fréquence (fig.10).

Sur un dernier exemple illustré sur la fig.7, l'activation de l'électrovanne varie, lorsque l'animal s'approche (plages h et i), en amplitude et en fréquence par exemple, est stoppée lorsque l'animal est stationnaire (plage i), ou encore lorsque l'animal s'éloigne (plage k) après une phase d'approche, même s'il est toujours présent dans la zone.

Sur la fig.3 , pour off rir une plus grande souplesse d'utilisation du dispositif de l'invention, et pour permettre à l'utilisateur d'ajuster l'activation de l'électrovanne en fonction de la connaissance qu'il a des attitudes de l'animal et de son accoutumance aux modalités de fonctionnement du dispositif, celui-ci dispose de moyens de sélection 28,30,32,40,42 de la mise en oeuvre en premier lieu des moyens 18 de détection de l'animal dans la zone, des moyens 20 de mesure de la distance entre l'animal et le poste de surveillance, et des moyens chronométriques 22, et en deuxième lieu des moyens 24 de variation de la durée d'activation de l'électrovanne 16 et des moyens 26 de variation de la fréquence d'activation de l'électrovanne 16. L'utilisateur dispose par ailleurs de moyens 34,36,38,44,46 de réglage respectif des dits moyens 18,20,22,24,26 pour leur initialisation et déterminer ainsi leur seuil de mise en oeuvre.

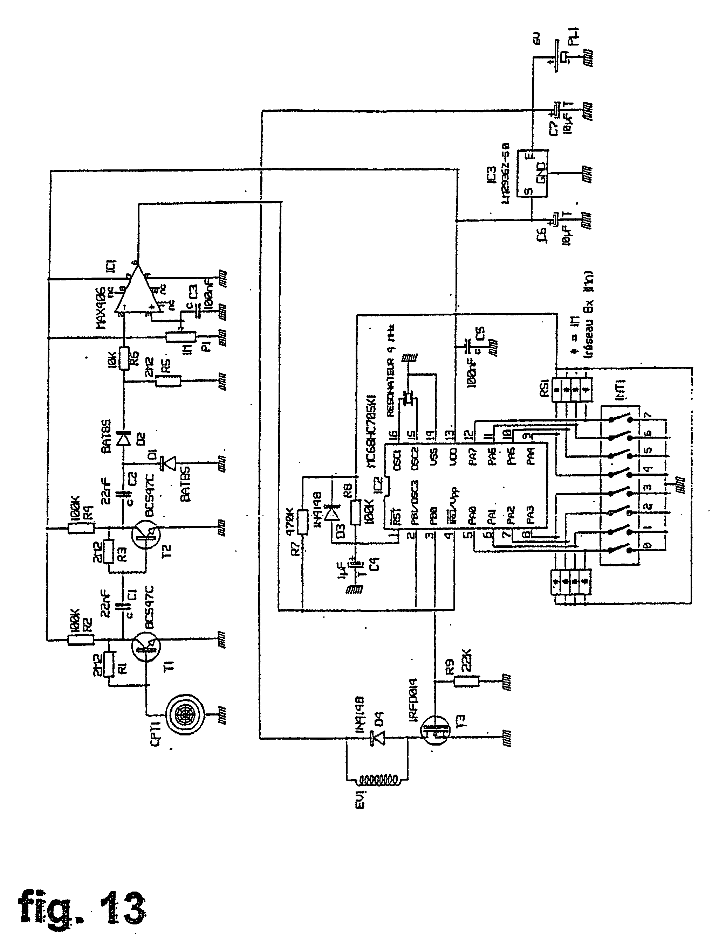

On notera que selon une forme préférée de réalisation, des moyens de visualisation, tels que diodes électroluminescentes (représentées sur le schéma de la fig.13), sont respectivement associés aux différents moyens de sélection et de réglage susvisés, afin de rendre plus ergonomique le dispositif de l'invention, et notamment afin de faciliter les démarches de l'utilisateur visant au réglage des différents moyens qu'il désire mettre en oeuvre.

Selon l'exemple de réalisation du dispositif de l'invention représenté sur les fig.1 et 3, et plus particulièrement appliqué à l'interdiction d'approche de l'animal vers le poste de surveillance 8, les moyens émetteurs 12 sont supportés par le collier 10 tandis que les moyens récepteurs 14, les moyens d'analyse et de traitement du signal reçu et les moyens 16 de projection de fluide sont supportés par le poste de surveillance 8.

Selon l'exemple de réalisation du dispositif de l'invention représenté sur les fig.2 et 4, et plus particulièrement appliqué à l'interdiction d'éloignement de l'animal, les moyens émetteurs 12 sont supportés par le poste de surveillance 8, tandis que les moyens récepteurs 14, les moyens d'analyse et de traitement du signal reçu et les moyens 16 de projection de fluide sont supportés par le collier 10. Selon cet exemple de réalisation, l'utilisateur peut sélectionner les moyens chronométriques 22 pour faire varier la sanction selon le temps d'absence de réception du signal ultrasonore, et donc le temps d'absence de l'animal hors de la zone, ou encore sélectionner les moyens de détermination de variation de distance pour appliquer la sanction dès que l'animal se rapproche trop de la limite de zone à ne pas franchir.

Selon une forme préférée de réalisation de l'invention, les moyens 12 et 14 de détection de la présence ou non de l'animal dans la zone comprennent des moyens de codage 48 (fig.3) coopérant pour une reconnaissance fiable du signal, afin notamment d'éviter des interférences inopportunes dans les informations échangées et pour une reconnaissance d'un signal émis par les moyens émetteurs 12 parmi une pluralité de moyens émetteurs 12 supportés par un collier respectif.

Par exemple sur les fig.1 et 3, les moyens de codage 48 permettent d'identifier le chien 4 et le chat 2, et d'adapter automatiquement l'activation de l'électrovanne 16 en fonction de l'animal 2,4 qui s'approche: sur la fig.1, l'activation de l'électrovanne 16 intervient pour une position déterminée du chien par rapport au poste de surveillance 8, tandis qu'elle n'est pas mise en oeuvre pour une même position du chat 4. On comprendra que dans ce cas, les moyens d'analyse 18,20,22 et de commande 24,26 doivent être en nombre équivalent au nombre de colliers 10.

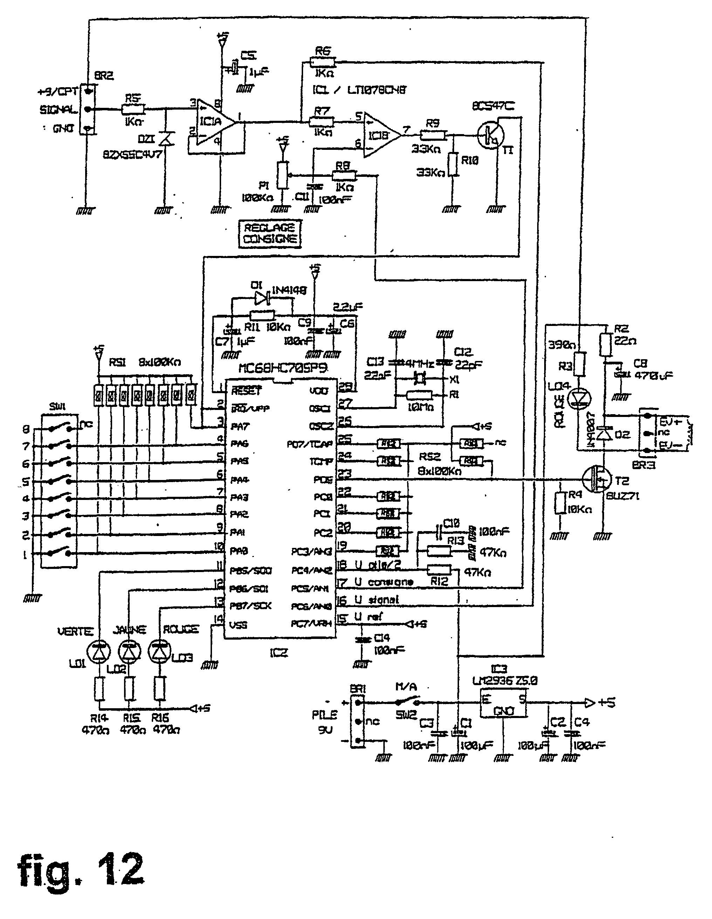

On notera que les fig.11 à 14 illustrent des formes de réalisation de l'invention sous un mode de fonctionnement numérique, ou logique, mettant en oeuvre un microprocesseur ; néanmoins, on comprendra que ces formes de réalisation ne sont données qu'à titre d'exemple, et que de manière équivalente les moyens électroniques mis en oeuvre par l'invention pourraient être des moyens déterminant un mode analogique de fonctionnement, comprenant notamment des potentiomètres pour le réglage des différents seuils des moyens d'analyse et de commande.

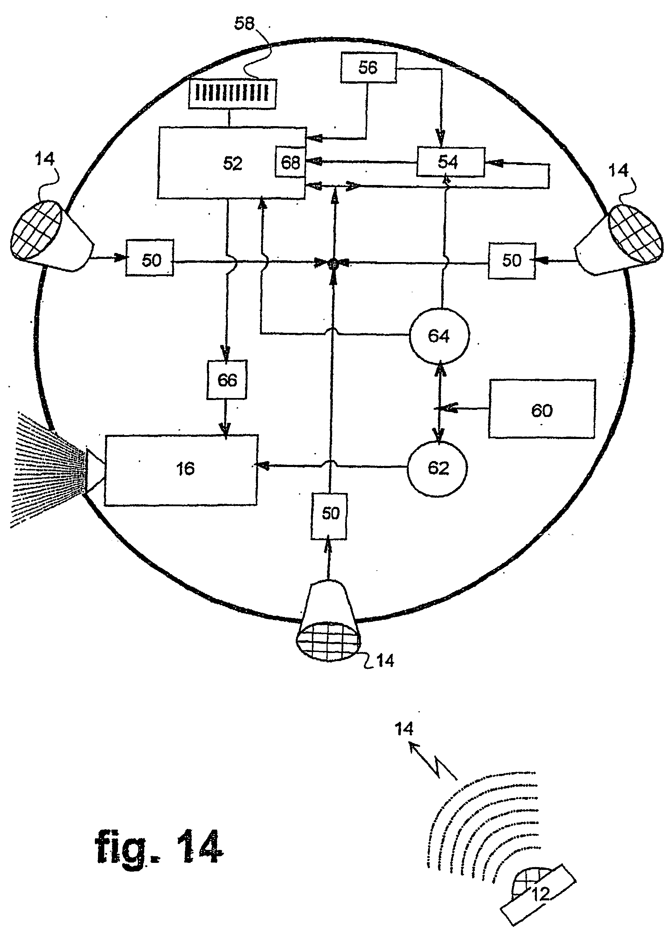

En se reportant plus particulièrement sur le schéma de la fig.14, en relation avec ceux des figures 11 à 13, qui illustrent des exemples simples de réalisation d'un dispositif de l'invention, trois capteurs ultrasoniques 14 sont disposés suivant des orientations concourantes à 120° afin d'offrir une réception omnidirectionnelle des signaux ultrasonores émis. Pour chaque capteur 14, des moyens 50 de traitement du signal reçu amplifient et filtrent ce dernier, qui subit ensuite une détection d'enveloppe pour son identification. Les trois signaux ainsi traités sont regroupés sur une sortie unique, leur amplitude correspondant à l'intensité du signal ultrasonore reçu, et donc à la distance séparant les moyens émetteurs 12 et les capteurs 14.

Le signal traité est appliqué au microcontrôleur 52 et à un comparateur 54 du signal traité par rapport à un signal de consigne correspondant à la limite de zone. On notera que ce signal de consigne est réglable au moyen d'un potentiomètre 56 par exemple, pour permettre à l'utilisateur de définir une limite de zone comprise par exemple entre 0,5m et 6m environ. Lorsque le signal appliqué au comparateur 54 dépasse le seuil du signal de consigne, la sortie du comparateur 54 déclenche le fonctionnement du microcontrôleur 52, par l'intermédiaire de moyens 68 de mise en veille du dispositif. On notera ainsi qu'en l'absence de signal à la sortie du comparateur 54, le microcontrôleur 52 est placé dans un mode de basse consommation, et que sa mise en veille intervient, suite à une période d'activité, après une absence de signal de plus de 500ms par exemple.

Les modalités de fonctionnement du microcontrôleur 52 sont multiples et peuvent être sélectionnées par l'utilisateur à partir d'une batterie de commutateurs 58.

Selon un premier exemple de fonctionnement sélectionné, le microcontrôleur 52 mesure l'amplitude du signal qu'il reçoit, et commande, par l'intermédiaire des moyens de commande 66, l'activation de l'électrovanne 16 avec une fréquence d'activation qui varie en fonction de cette amplitude, et donc en fonction de la distance séparant l'animal du poste de surveillance 8. Selon un deuxième exemple, tant que le signal est présent à l'entrée du microcontrôleur 52, l'électrovanne est activée avec une variation de fréquence d'activation.

On comprendra que la variation de fréquence des activations de l'électrovanne s'effectue par une réduction de fraction de temps séparant deux activations successives de l'électrovanne, la dite fraction de temps étant choisi par l'utilisateur grâce aux dits moyens de sélection d'un mode de fonctionnement du dispositif parmi une pluralité de modes de fonctionnement mémorisés.

Grâce à la batterie de commutateurs 58, l'utilisateur peut régler la durée de chacune des activations de l'électrovanne 16, entre 40 ms et 320 ms par exemple, la fréquence, ou la variation de fréquence, entre deux activations de l'électrovanne 16, entre 0,5s et 8s par exemple, et la durée maximale d'action du dispositif après la détection d'une situation de faute, par exemple jusqu'à 30 s.

On notera que les commutateurs de la batterie 58 sont avantageusement remplaçables par des transpondeurs actionnables par une télécommande à touches de sélection de programmes parmi une pluralité de programmes mémorisés, correspondant à un mode respectif de fonctionnement du dispositif.

Le dispositif comprend une pile 60 qui alimente directement un circuit économiseur d'énergie 62, dont le rôle est d'optimiser la consommation électrique à chaque activation de l'électrovanne 16. Les autres circuits du dispositif sont alimentés par un régulateur 64 afin de ne pas être soumis aux variations de tension provoquées par les activation de l'électrovanne.

## Revendications

1. Dispositif d'interdiction de franchissement de limite de zone par un animal (2,4), du genre de dispositif comprenant:
- une source (60) d'énergie électrique basse tension,
- des moyens (18,12,14) de détection de la position de l'animal (2,4) par rapport à la limite de zone, comprenant des moyens interactifs (12,14) respectivement embarqués par l'animal (2,4) et supportés par un poste de surveillance (8),
- des moyens (16), dits de sanction, générateurs d'un stimulus chez l'animal (2,4), et
- des moyens de commande (66) de la mise en oeuvre des moyens de sanction, placés sous la dépendance de moyens (18,20,22,24,26,50,52,54) de traitement et d'analyse des informations fournies par les dits moyens de détection (12,24),
**caractérisé:**
**en ce que** les moyens de sanction (16) sont des moyens de brumisation d'un fluide, supportés par ledit poste de surveillance (8) et comprenant une électrovanne et un réservoir du fluide sous pression, les dits moyens de commande (66) étant des moyens d'activation à l'ouverture de l'électrovanne (16) pour libérer le fluide contenu dans le réservoir.

2. Dispositif selon la revendication 1, **caractérisé:**
**en ce que** la mise en oeuvre des moyens de commande (66) des moyens de sanction (16) est placée sous la dépendance de moyens (24,26,52) pour faire varier l'activation de l'électrovanne (16) suivant l'un quelconque au moins des paramètres comprenant la durée entre deux activations successives, ou, inversement, la fréquence d'activation, de l'électrovanne (16), la durée de chacune des activations de l'électrovanne (16), et le débit de l'électrovanne (16) à chacune de ses activations à durée constante,

3. Dispositif selon la revendication 2, **caractérisé:**
**en ce que** les moyens pour faire varier l'activation de l'électrovanne (16) comprennent des moyens de mesure (12,14,20,52) de la distance séparant l'animal (2,4) du poste de surveillance (8), et des moyens (22) chronométriques pour mesurer le temps de présence ou non de l'animal (2,4) dans la zone, et
**en ce que** le dispositif comprend en outre des moyens (58,28,30,32,40,42) de sélection par l'utilisateur de la mise en oeuvre, pour faire varier l'activation de l'électrovanne (16), de l'un ou l'autre des moyens (12,14,20,52) de mesure de la distance ou des moyens chronométriques (22).

4. Dispositif selon la revendication 3, **caractérisé:**
**en ce que** les dits moyens de sélection (28,30,32,40,42) sont associés à des moyens de réglage (34,36,38,44,46) du quantum de chacun des paramètres de variation de l'activation de l'électrovanne.

5. Dispositif selon la revendication 3, **caractérisé:**
**en ce que** les dits moyens interactifs de détection de la position de l'animal par rapport au poste de surveillance comprennent des moyens émetteurs (12) et récepteurs (14) de signaux ultrasonores respectivement supportés soit par l'animal (2,4) soit par le poste de surveillance (8), et des moyens de traitement et d'analyse du signal ultrasonore reçu comprenant des moyens de comparaison (54) entre le signal ultrasonore reçu et un signal de consigne, pour déterminer la présence ou non de l'animal (2,4) dans la zone, et des moyens (52) de mesure de l'amplitude du signal ultrasonore reçu pour déterminer la distance séparant les moyens émetteurs (12) des moyens récepteurs (14).

6. Dispositif selon les revendications 4 et 5, **caractérisé:**
**en ce que** les dits moyens d'analyse du signal ultrasonore reçu et les dits moyens pour faire varier l'activation de l'électrovanne mettent en oeuvre un microprocesseur (52), dont les modalités de fonctionnement sont préalablement sélectionnées par l'utilisateur parmi une pluralité de modalités de fonctionnement mémorisées, au moyen d'une batterie de commutateurs (58) constituant les dits moyens de sélection et de réglage, par combinaison de sélection entre les différents commutateurs.

7. Dispositif selon la revendication 5, **caractérisé:**
**en ce que** les moyens de traitement du signal ultrasonore reçu comprennent des moyens (50) d'amplification et de filtration du signal reçu, et de détection de l'enveloppe du signal pour identifier le signal reçu et le reconnaître comme étant le signal valide émis par les moyens émetteurs (12) du dispositif, et pour émettre un signal, dit d'information, vers les moyens de comparaison (54) et les moyens de mesure (52) de l'amplitude du signal reçu.

8. Dispositif selon la revendications 6, **caractérisé:**
**en ce qu'**il comprend en outre, interposés entre la source (60) d'énergie électrique et le microprocesseur (52), des moyens (68), dits de mise en veille du dispositif, pour placer le microprocesseur (52) en mode basse consommation en l'absence de détection d'une situation de faute de l'animal (2,4) relative à sa présence ou non dans la zone.

9. Procédé de fonctionnement d'un dispositif selon les revendications 7 et 8, **caractérisé:**
**en ce qu'**il consiste:
- à reconnaître la validité du signal ultrasonore reçu de la part de moyens émetteurs (12) portés par l'animal (2, 4) et à le traiter pour former un signal, dit d'information, dont l'amplitude varie selon l'intensité du signal ultrasonore reçu,
- à comparer le signal d'information avec un signal de référence, pour détecter la présence ou l'absence de l'animal (2,4) dans la zone, et parallèlement à introduire le signal d'information dans le microprocesseur (52),
- à, dans le cas où le présence ou l'absence de l'animal (2,4) dans la zone est détectée, introduire dans le microprocesseur (52) un second signal, dit de mise en oeuvre, pour activer le microprocesseur (52) normalement en position de veille, ce dernier (52) mesurant alors la distance séparant l'animal (2,4) du poste de surveillance (8) à partir de l'amplitude du signal d'information, puis
- à faire varier par le microprocesseur (52) la mise en oeuvre de moyens de commande (66) de moyens de sanction (16) supportés par un poste fixe (8) de surveillance de la zone, en fonction de la sélection préalablement opérée par l'utilisateur au moyen de la batterie de commutateurs (58), soit à partir du signal de mise en oeuvre introduit dans le microprocesseur (52), par l'intermédiaire des moyens chronométriques (22), soit à partir de la variation d'amplitude du signal d'information.

10. Procédé d'interdiction de franchissement de zone par un animal mettant en oeuvre un dispositif selon la revendication 2, du genre de procédé comprenant les étapes consistant successivement:
- à détecter la présence ou non de l'animal (2,4) dans une zone (6) dont la limite est préréglée par l'utilisateur, grâce à des moyens interactifs (12,14) respectivement embarqués sur l'animal (10,2,4) et supportés par le poste de surveillance (8), pour définir une situation de faute ou non de l'animal (2,4) à partir des informations échangées entre les dits moyens interactifs (12,14), et
- à opérer en cas d'une situation de faute définie, un stimulus pour l'animal (2,4) par des moyens (16) dits de sanction, **caractérisé en ce que** le stimulus est opéré dès que la situation de faute est définie, par projection d'un fluide au moyen d'une électrovanne (16), supportée par le poste de surveillance (8) et dont l'activation est placée sous la dépendance des moyens de détection (12,14) de la faute, et **en ce que** ce stimulus est repété avec une accélération de la fréquence de projection du fluide, laquelle fréquence varie en fonction. de l'évolution de la situation de faute suivant l'un quelconque au moins des facteurs d'évolution comprenant une variation de la distance séparant l'animal (2,4) du poste de surveillance (8), et une persistance de la situation de faute.

11. Procédé selon la revendication 40, **caractérisé:**
**en ce qu'**il comprend l'étape préalable consistant à sélectionner le mode de fonctionnement du dispositif souhaité par l'utilisateur parmi une pluralité de modalités de fonctionnements mémorisées.

12. Utilisation d'un dispositif selon l'une des revendications 1 à 8 pour éloigner un animal (2, 4) d'une zone (6) à protéger.

## Claims

1. Device for preventing an animal (2, 4) from crossing the boundary of an area, the device being of the type comprising:
- a source (60) of low-voltage electrical energy,
- means (18, 12, 14) of detecting the position of the animal (2, 4) with respect to the area boundary, comprising interactive means (12, 14) which are, respectively, mounted on the animal (2, 4) and mounted on a monitoring station (8),
- means (16), called deterrent means, for generating a stimulus in the animal (2, 4), and
- control means (66) for the activation of the deterrent means, dependent on means (18, 20, 22, 24, 26, 50, 52, 54) for processing and analysing the data supplied by the said detecting means (12, 14), **characterized in that** the deterrent means (16) are means for spraying a mist of fluid, mounted on the said monitoring station (8) and comprising a solenoid valve and a reservoir of pressurized fluid, the said control means (66) being activation means for opening the solenoid valve (16) to release the fluid contained in the reservoir.

2. Device according to Claim 1, **characterized in that** the activation of the control means (66) of the deterrent means (16) is made dependent on means (24, 26, 52) for varying the activation of the solenoid valve (16) according to at least any one of the parameters comprising the time interval between two successive activations, or its inverse which is the frequency of activation, of the solenoid valve (16), the duration of each activation of the solenoid valve (16), and the rate of flow of the solenoid valve (16) whenever it is activated with a constant duration.

3. Device according to Claim 2, **characterized in that** the means for varying the activation of the solenoid valve (16) comprise means (12, 14, 20, 52) for measuring the distance between the animal (2, 4) and the monitoring station (8), and chronometer means (22) for measuring the time for which the animal (2, 4) is present or absent in the area, and **in that** the device additionally comprises means (58, 28, 30, 32, 40, 42) by which the user can select the mode of activation, in order to vary the activation of the solenoid valve (16), one or other of the distance measuring means (12, 14, 20, 52) or the chronometer means (22).

4. Device according to Claim 3, **characterized in that** the said selection means (28, 30, 32, 40, 42) are associated with means (34, 36, 38, 44, 46) for adjusting the proportion of each of the parameters of variation of the activation of the solenoid valve.

5. Device according to Claim 3, **characterized in that** the said interactive means of detecting the position of the animal with respect to the monitoring station comprise ultrasonic signal transmitting means (12) and receiving means (14), mounted on the animal (2, 4) and on the monitoring station (8) respectively, and means for processing and analysing the received ultrasonic signal, comprising means (54) for comparing the received ultrasonic signal with a reference signal, to determine whether or not the animal (2, 4) is present in the area, and means (52) for measuring the amplitude of the received ultrasonic signal to determine the distance between the transmitter means (12) and the receiver means (14).

6. Device according to Claims 4 and 5, **characterized in that** the said means of analysing the received ultrasonic signal and the said means for varying the activation of the solenoid valve make use of a microprocessor (52), whose operating modes are selected in advance by the user from a plurality of stored operating modes, by means of a set of switches (58) forming the said means of selection and adjustment, by making combinations of the selection of different switches.

7. Device according to Claim 5, **characterized in that** the means of processing the received ultrasonic signal comprise means (50) for amplifying and filtering the received signal, and for detecting the signal envelope to identify the received signal and to recognize it as being the valid signal sent by the transmitter means (12) of the device, and for transmitting a signal, called the data signal, to the comparison means (54) and the means (52) of measuring the amplitude of the received signal.

8. Device according to Claim 6, **characterized in that** it additionally comprises means (68) known as stand-by means of the device, interposed between the electrical energy source (60) and the microprocessor (52), for switching the microprocessor (52) to low-consumption mode when no incorrect behaviour of the animal (2, 4) is detected in respect of its presence or absence in the area.

9. Operating process of a device according to Claims 7 and 8, **characterized in that** it consists in:
- recognizing the validity of the ultrasonic signal received from transmitter means (12) mounted on the animal (2, 4) and processing it to form a signal known as the data signal, whose amplitude varies with the intensity of the received ultrasonic signal,
- comparing the data signal with a reference signal, for detecting the presence or absence of the animal (2, 4) in the area, while simultaneously entering the data signal into the microprocessor (52),
- entering a second signal, called the start-up signal, into the microprocessor (52) if the presence or absence of the animal (2, 4) in the area is detected, to activate the microprocessor (52) which is normally in stand-by mode, after which the microprocessor (52) measures the distance between the animal (2, 4) and the monitoring station (8) on the basis of the amplitude of the data signal, and then
- making the microprocessor (52) vary the activation of control means (66) of deterrent means (16) mounted on a fixed station (8) for monitoring the area, in accordance with the selection made previously by the user by means of the set of switches (58), either on the basis of the activation signal entered into the microprocessor (52) by means of the chronometer means (22), or on the basis of the variation of the amplitude of the data signal.

10. Process for preventing an animal from crossing an area, using a device according to Claim 2, the process being of the type comprising the following stages in sequence:
- detecting the presence or absence of the animal (2, 4) in an area (6) whose boundary is predetermined by the user, by the use of interactive means (12, 14) mounted, respectively, on the animal (10, 2, 4) and on the monitoring station (8), in order to determine whether or not the animal (2, 4) is behaving incorrectly, on the basis of information exchanged between the said interactive means (12, 14), and
- if incorrect behaviour is detected, imparting a stimulus to the animal (2, 4) by means (16) called deterrent means, **characterized in that** the stimulus is imparted as soon as the incorrect behaviour is detected, by spraying a fluid by means of a solenoid valve (16), mounted on the monitoring station (8), the activation of these means being made dependent on the means (12, 14) of detecting the incorrect behaviour, and **in that** this stimulus is repeated with an acceleration of the fluid spraying frequency, this frequency varying as a function of the development of the incorrect behaviour according to at least any one of the development factors comprising a variation in the distance between the animal (2, 4) and the monitoring station (8) and a persistence of the incorrect behaviour.

11. Process according to Claim 10, **characterized in that** it comprises the preliminary stage consisting of the selection of the operating mode of the device desired by the user from a plurality of stored operating modes.

12. Use of a device according to one of Claims 1 to 8 for excluding an animal (2, 4) from an area (6) to be protected.

## Patentansprüche

1. Vorrichtung zum Verhindern des Überschreitens einer Bereichsgrenze durch ein Tier (2,4) von der Art einer Vorrichtung, welche umfasst:
- eine Quelle (60) elektrischer Energie niedriger Spannung,
- Mittel (18,12,14) zum Feststellen der Position des Tieres (2,4) in Bezug auf die Bereichsgrenze, wobei diese Mittel interaktive Mittel (12,14) umfassen, die jeweils vom Tier (2,4) getragen werden als auch sich an einer Überwachungsstelle (8) befinden,
- Mittel (16), sogenannte Züchtigungsmittel, die beim Tier (2,4) einen Reiz erzeugen, und
- Steuerungsmittel (66) zur Anwendung der Züchtigungsmittel, die von den Mitteln (18,20,22,24,26,50,52,54) zur Behandlung und Analyse der von den besagten Mitteln für die Ortsermittlung (12,14) gelieferten Informationen abhängig sind,
**dadurch gekennzeichnet,**
**dass** die Züchtigungsmittel (16) Mittel zum Vernebeln eines Mediums sind, die sich an der besagten Überwachungsstelle (8) befinden und die ein Magnetventil und einen Vorratsbehälter für das unter Druck stehende Medium umfassen, wobei die besagten Steuerungsmittel (66) Betätigungsmittel zum Öffnen des Magnetventils (16) sind, um das in dem Vorratsbehälter enthaltene Medium freizusetzen.

2. Vorrichtung nach Anspruch 1, **dadurch gekennzeichnet,**
**dass** die Anwendung der Steuerungsmittel (66) dergestalt erfolgt, dass das Züchtigungsmittel (16) in Abhängigkeit von Mitteln (24,26,52) eingesetzt wird, um die Betätigung des Magnetventils (16) in Abhängigkeit von mindestens einem der Parameter zu verändern, zu denen gehören: die Dauer zwischen zwei aufeinander folgenden Betätigungen oder umgekehrt, die Häufigkeit der Betätigung des Magnetventils (16), die Dauer einer jeden der Betätigungen des Magnetventils (16) und der Volumenstrom durch das Magnetventil bei jeder seiner Betätigungen mit konstanter Dauer.

3. Vorrichtung nach Anspruch 2, **dadurch gekennzeichnet,**
**dass** die Mittel zum Verändern der Betätigung des Magnetventils Mittel zur Messung (12,14,20,52) des Abstandes zwischen dem Tier (2,4) und der Überwachungsstelle (8) und chronometrische Mittel (22) zur Messung der Zeit der Anwesenheit oder Abwesenheit des Tieres (2,4) im Bereich umfassen, und
**dass** die Vorrichtung unter anderem Auswahlmittel (58,28,30,32,40,42) umfasst, die dem Benutzer für die Anwendung zur Verfügung stehen, damit dieser die Betätigung des Magnetventils, des einen oder anderen Mittels (12,14,20,52) zur Messung des Abstandes oder der chronometrischen Mittel (22) verändern kann.

4. Vorrichtung nach Anspruch 3, **dadurch gekennzeichnet,**
**dass** die besagten Auswahlmittel (28,30,32,40,42) mit Einstellmitteln (34,36,38,44,46) für die Messgröße eines jeden der für die Betätigung des Magnetventils veränderlichen Parameter verbunden sind.

5. Vorrichtung nach Anspruch 3, **dadurch gekennzeichnet,**
**dass** die besagten interaktiven Mittel zum Feststellen der Position des Tieres in Bezug auf die Überwachungsstelle umfassen: Sendemittel (12) und Empfangsmittel (14) für Ultraschallsignale, die entweder vom Tier (2,4) getragen werden oder sich an der Überwachungsstelle (8) befinden, und Mittel für die Behandlung und die Analyse des aufgenommenen Ultraschallsignals, wobei diese Mittel Vergleichsmittel (54) zwischen dem aufgenommenen Ultraschallsignal und einem Vergleichssignal umfassen, um die Anwesenheit oder Abwesenheit des Tieres (2,4) in dem Bereich festzustellen, und Mittel (52) zum Messen der Amplitude des aufgenommenen Ultraschallsignals, um den Abstand zwischen den Sendemitteln (12) und den Empfangsmitteln (14) festzustellen.

6. Vorrichtung nach den Ansprüchen 4 und 5, **dadurch gekennzeichnet,**
**dass** die besagten Mittel zur Analyse des aufgenommenen Ultraschallsignals und die besagten Mittel zum Verändern der Betätigung des Magnetventils einen Mikroprozessor (52) einsetzen, dessen Betriebsmodalitäten vom Benutzer aus einer Anzahl von gespeicherten Betriebsmodalitäten mit Hilfe einer Reihe von Schaltern (58), welche die besagten Mittel zur Auswahl und Einstellung bilden, durch Kombination der Auswahl zwischen den verschiedenen Schaltern vorher ausgewählt werden.

7. Vorrichtung nach Anspruch 5, **dadurch gekennzeichnet,**
**dass** die Mittel zur Behandlung des aufgenommenen Ultraschallsignals Mittel (50) zur Verstärkung und Filterung des aufgenommenen Signals und zum Ermitteln der Hüllkurve des Signals zur Identifizierung des aufgenommenen Signals und zum Erkennen des Signals als gültiges, von den Sendemitteln (12) der Vorrichtung ausgesendetes Signal, und zur Abgabe eines als Informationssignals bezeichneten Signals an die Vergleichsmittel (54) und an die Mittel (52) zur Messung der Amplitude des aufgenommenen Signals.

8. Vorrichtung nach Anspruch 6, **dadurch gekennzeichnet,**
**dass** sie unter anderem zwischen der Quelle (60) für Elektroenergie und dem Mikroprozessor (52) Mittel (66) aufweist, die Mittel Überführung der Vorrichtung in den Bereitschaftszustand genannt werden und die den Mikroprozessor (52) bei nicht erfolgtem Feststellen eines fehlerhaften Aufenthalts des Tieres (2,4) hinsichtlich seiner Anwesenheit oder Abwesenheit in dem Bereich in den Modus des niedrigen Verbrauchs versetzen.

9. Funktionsweise einer Vorrichtung nach den Ansprüchen 7 und 8, **dadurch gekennzeichnet,**
**dass** sie darin besteht,
- **dass** die Gültigkeit des Signals, das von den vom Tier (2,4) getragenen Sendemittel (12) empfangen wird, erkannt und bearbeitetwird, um daraus ein Signal, das sogenannte Informationssignal, zu bilden, dessen Amplitude sich je nach der Stärke des aufgenommenen Ultraschallsignals ändert,
- **dass** das Informationssignal mit einem Referenzsignal verglichen wird, um die Anwesenheit oder Abwesenheit des Tieres (2,4) in dem Bereich festzustellen und parallel dazu das Informationssignal in den Mikroprozessor (52) eingegeben wird,
- **dass** in dem Fall, wo die Anwesenheit oder die Abwesenheit des Tieres (2,4) in dem Bereich festgestellt wird, in den Mikroprozessor (52) ein zweites Signal, das sogenannte Anwendungssignal, eingegeben wird, um den Mikroprozessor (52), der sich normalerweise im Bereitschaftszustand befindet, zu aktivieren, wobei dieser Letztere (52) dann den Abstand zwischen dem Tier (2,4) und der Überwachungsstelle (8) auf der Grundlage der Amplitude des Informationssignals misst, und
- **dass** durch den Mikroprozessor (52) die Anwendung des Steuerungsmittels (66) für die Züchtigungsmittel (16), die sich an einer festen Stelle (8) zur Überwachung des Bereichs befinden, in Abhängigkeit von der vorher anhand der Reihe von Schaltern (58) vom Benutzer vorgenommenen Auswahl verändert wird, und zwar entweder auf der Grundlage des in den Mikroprozessor (52) über die chronometrischen Mittel (22) eingegebenen Anwendungssignals oder auf der Grundlage der Amplitudenänderung des Informationssignals.

10. Verfahren zum Verhindern des Überschreitens der Bereichsgrenze durch ein Tier durch Anwendung einer Vorrichtung gemäß Anspruch 2 von der Art des Verfahrens, das die Etappen umfasst, die nacheinander in Folgendem bestehen:
- Feststellen der Anwesenheit oder Abwesenheit des Tieres (2,4) in einem Bereich (6), dessen Grenze vom Benutzer vorher eingestellt wird, dank der interaktiven Mittel (12,14), die am Tier (10,2,4) getragen werden oder sich an der Überwachungsstelle (8) befinden, um einen Zustand des vorhandenen oder nicht vorhandenen fehlerhaften Aufenthalts des Tieres (2,4) auf der Grundlage von Informationen festzulegen, die zwischen den besagten interaktiven Mitteln (12,14) ausgetauscht werden, und
- im Fall eines festgestellten Zustandes des fehlerhaften Aufenthalts einen Reiz für das Tier (2,4) durch Mittel (16), die Züchtigungsmittel genannt werden, auszuüben,
**dadurch gekennzeichnet,**
**dass**, sobald die Situation des fehlerhaften Aufenthalts festgestellt worden ist, der Reiz durch Verspritzen eines Mediums mit Hilfe eines Magnetventils (16) ausgeübt wird, das sich an der Überwachungsstelle (8) befindet und dessen Betätigung in Abhängigkeit von den Mitteln (12,14) zum Feststellen des fehlerhaften Aufenthalts erfolgt, und
**dass** dieser Reiz mit einer Erhöhung der Frequenz der Medienabgaben wiederholt wird, wobei sich diese Häufigkeit in Abhängigkeit von der Entwicklung des fehlerhaften Aufenthalts in Abhängigkeit von mindestens einem der Entwicklungsfaktoren ändert, zu denen eine Änderung des Abstandes zwischen dem Tier (2,4) und der Überwachungsstelle (8) und ein Fortbestand des fehlerhaften Aufenthalts gehören.

11. Verfahren nach Anspruch 10, **dadurch gekennzeichnet,**
**dass** es die vorherige Etappe umfasst, welche darin besteht, dass die vom Benutzer gewünschte Betriebsweise der Vorrichtung unter einer Vielzahl von gespeicherten Betriebsmodalitäten ausgewählt werden kann.

12. Benutzung einer Vorrichtung nach einem der Ansprüche 1 bis 8, um ein Tier (2,4) aus einem zu schützenden Bereich (6) zu entfernen.
